# EUROPEAN PATENT APPLICATION

(11) **EP 1 303 105 A1**
(43) Date of publication of application: **16.04.2003**
(21) Application number: 02257049.3
(22) Date of filing: 10.10.2002
(51) Int. Cl.: H04L 29/08, H04L 29/06

(54) **A method and system for implementing location aware information access and retrieval in a wireless portal server**

(30) Priority: 10.10.2001 US 975106
(71) Applicant: Sun Microsystems, Inc., Santa Clara, California 95054 (US)
(72) Inventor: Kavacheri, Sathya, Sunnyvale, California 94086 (US); Tran, Luu, Santa Clara, California 95050 (US)
(74) Representative: Potter, Julian Mark

(57) **Abstract**

This writing sets forth a method for using user location information to customize information in a web portal. The method involves a number of steps which are:
1) receiving user location information;
2) receiving a request for application specific information;
3) selecting application specific information based on user location information; and
4) transmiting the application specific information to the user.

## Description

This application is related to the following copending and commonly assigned U.S. Patent Applications:
"EXTENSIBLE CLIENT AWARE DETECTION IN A WIRELESS PORTAL SYSTEM", Serial No. 09/929,477, filed on 8/13/01;
"CLIENT AWARE AUTHENTICATION IN A WIRELESS PORTAL SYSTEM", Serial No. 09/929,476, filed on 8/13/01;
"EXTENSIBLE CLIENT AWARE HIERARCHICAL FILE MANAGEMENT IN A WIRELESS PORTAL SYSTEM", Serial No. 09/929,743, filed on 8/13/01;
"CLIENT AWARE CONTENT SELECTION AND RETRIEVAL IN A WIRELESS PORTAL SYSTEM", Serial No. 09/929,654, filed on 8/13/01;
"CLIENT AWARE CONTENT SCRAPING AND AGGREGATION IN A WIRELESS PORTAL SYSTEM", Serial No. 09/929,545, filed on 8/13/01; and
"CLIENT AWARE EXTENSIBLE MARKUP LANGUAGE CONTENT RETRIEVAL AND INTEGRATION IN A WIRELESS PORTAL SYSTEM", Serial No. 09/929,802, filed on 8/13/01. The above recited U.S. Patent Applications are incorporated herein in their entirety.

The present writing relates generally to methods and systems for implementing location based mapping functionality, in particular for client devices. More specifically, the present writing pertains to a method and system for implementing location aware information access and retrieval in a wireless portal server.

The use of Web portals has become widespread for obtaining information, news, entertainment, and the like, via the World Wide Web. A Web portal is generally a Web "supersite" that provides a variety of services including Web searching, news, white and yellow pages directories, free e-mail, discussion groups, online shopping and links to other sites. The Web portal term is generally used to refer to general purpose sites, however, it is increassingly being used to refer to vertical market sites that offer the same services, but only to a particular industry such as banking, insurance or computers, or fulfill specific needs for certain types of users, for example, business travelers who are often away from their office or their primary point of business.

Certain types of Web portals have evolved into customized, user type specific sources of information. One example would be a corporate Web site, wherein an internal Web site (intranet) provides proprietary, enterprise-wide information to company employees as well as access to selected public Web sites and vertical-market Web sites (suppliers, vendors, etc.). Such a Web site would typically include a customized search engine for internal documents as well as the ability to customize the portal page for different user groups and individuals. Access to such customizable Web sites by business travelers, or other types of users who require concise prompt access to information, is a highly sought-after goal.

Yellow pages directory types of information and mapping types of information are also very helpful for mobile users. For example, for a mobile user (e.g., business traveler), it would be very advantageous to obtain wireless access to a Web portal capable of providing yellow pages functionality and or location based mapping (e.g., street level maps) functionality. Additionally, it would be advantageous if such functionality could be obtained via a portable handheld device, such as a cellphone or a wireless PDA. However, presentation of information on the small screens typical with such portable handheld devices requires customization of the Web portal and the formatting of the data it provides.

Standards have been developed to provide a widely used method of formatting data for the smaller screens of portable handheld devices. One such standard is WML (Wireless Markup Language). WML is a tag-based language used in the Wireless Application Protocol (WAP). WML is an XML document type allowing standard XML and HTML tools to be used to develop WML applications. WAP is a standard for providing cellular phones, pagers and other handheld devices with secure access to e-mail and text-based Web pages. WAP provides a complete environment for wireless applications that includes a wireless counterpart of TCP/IP and a framework for telephony integration such as call control and phone book access. WAP features the Wireless Markup Language (WML) and is a streamlined version of HTML for small screen displays. It also uses WMLScript, a compact JavaScript-like language that runs in limited memory. WAP is designed to run over all the major wireless networks in place now and in the future.

Although tools are in place (e.g., wirelessly connected portable handheld devices,WML and WAP based communications standards, customized Web portals, etc.) to provide customized, application specific, information to business travelers and other various types of users via portable handheld devices, existing prior art applications and methods are still generally targeted towards the mass market. The number of individually customized and tailored information delivery mechanisms is limited. For example, although a custom Web site or Web portal might be directed towards business travelers (e.g., presenting restaurant and hotel information, yellow pages, car rental and airline flight information, etc.) the amount of information which can be configured for and delivered to a specific business traveler is limited. A user in a particular city (e.g., by entering location into a user interface of the device) can be presented with information that any other user in such a particular city would be presented with. Specifically, location specific information is not customized and is not presented automatically to individual users.

Thus, what is required is a solution that can customize information presented from a Web site or a Web portal with respect to an individual user and his location. The required solution should automatically format the information in accordance with WML and WAP communication standards. In addition, the required solution should automatically incorporate individual specific location information with respect to other types of information which may be retrieved by a user. Aspects of the present invention were made in consideration of the above requirements.

In one aspect, the present invention can customize information presented from a Web site or a Web portal with respect to an individual user; automatically format the information in accordance with WML and WAP communication standards; and automatically incorporate individual specific location information with respect to other types of information which may be retrieved by a user.

In one embodiment, the present invention is implemented as a method for using user location information to customize information in a Web portal. The method is implemented within a client/server framework. The method includes the steps of receiving user location information from a user, receiving a request for application specific information from the user, selecting pertinent application specific information based on the user location information, and transmitting the pertinent application specific information to the user.

The client device can be a portable handheld device such as a cellular phone or a wirelessly connected PDA (personal digital assistant). Communication can be established in accordance with a number of different standards. For example, in one embodiment, the user Iocation information can be received in accordance with WAP (wireless application protocol) communication standards. Other communication standards can be used (e.g., iMode, cHTML, etc.). The user location information can be, for example, a current address, a zip code, or geographical coordinates of the user. Application specific information of the user can be, for example, calendar information, and the pertinent application specific information can be, for example, information regarding the location of calendar events with respect to the user location. Similarly, application specific information can be hotel information, and the pertinent application specific information can be information regarding the location of hotels with respect to the user location. Additional examples include the application specific information of the user being appointment information for the user, and the pertinent application specific information being information regarding the location of appointments with respect to the user location. Applications can include, for example, a yellow pages function where user location can be used to fetch various points of interest around the area (such as ATMs, gas stations, etc.), a map function where user location can be used to generate a map specific to that location, and the like.

The user location information can be associated with a location name, wherein the user selects a particular location by selecting a particular location name from a menu of location names presented by a portable handheld device. The present invention is also compatible with modern location fixing mechanisms, such as GPS (global positioning system). The use of WML and WAP standards ensures compatibility with a variety of different types of portable handheld devices such as cellphones, wirelessly connected PDAs, palmtop computer systems, and the like. In this manner, an embodiment of the present invention automatically incorporates individual specific location information with respect to other types of information which may be retrieved by a user, and present such information in a manner specific to the individual circumstances of particular user.

The accompanying drawings, which are incorporated in and form a part of this specification, are provided by way of example only to illustrate embodiments of the invention, and together with the description, serve to explain the principles of the invention:
Figure 1 shows a client/server computer system in accordance with one embodiment of the present invention.
Figure 2 shows a flowchart of the steps of a user location application customization process in accordance with one embodiment of the present invention.
Figure 3 shows a diagram depicting one implementation of the internal software components of a server used to implement the location awareness functionality in accordance with one embodiment of the present invention.
Figure 4 shows a map channel, a calendar channel, and a Yellow Pages channel as implemented by a server in accordance with one embodiment of the present invention.
Figure 5 shows a diagram of a computer system platform in accordance with one embodiment of the present invention.

Reference will now be made in detail to the embodiments of the invention, a method for using user location information to customize information retrieved via a server, examples of which are illustrated in the accompanying drawings. While aspects of the invention will be described in conjunction with the preferred embodiments, it will be understood that it is not intended to limit the invention to these embodiments. On the contrary, the invention is intended to cover alternatives, modifications and equivalents, which may be included within the spirit and scope of the invention.

Furthermore, in the following detailed description of embodiments of the present invention, numerous specific details are set forth in order to provide a thorough understanding of the present invention. However, it will be obvious to one of ordinary skill in the art that aspects of the present invention may be practiced without these specific details. In other instances, well known methods, procedures, components, and circuits have not been described in detail as not to unnecessarily obscure aspects of the present invention.

One or more embodiments of the present invention are directed towards a method for using user location information to customize information in a Web portal, as implemented within a client/server framework. One or more embodiments of the present invention can customize information presented from a Web site or a Web portal with respect in an individual user; automatically format the information in accordance with different communication standards (e.g. WML, WAP, etc); and automatically incorporate individual specific location information with respect to other types of information which may be retrieved by a user.

### Notation and nomenclature

Some portions of the detailed descriptions which follow are presented in terms of procedures, steps, logic blocks, processing, and other symbolic representations of operations on data bits within a computer memory. These descriptions and representations are the means used by those skilled in the data processing arts to convey most effectively the substance of their work to others skilled in the art. A procedure, computer executed step, logic block, process, etc., are here, and generally, conceived to be self-consistent sequences of steps or instructions leading to a desired result. The steps are those requiring physical manipulations of physical quantities. Usually, though not necessarily, these quantities take the form of electrical or magnetic signals capable of being stored, transferred, combined, compared, and otherwise manipulated in a computer system. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the following discussions, it is appreciated that throughout descriptions of embodiments of the present invention, discussions utilizing terms such as "processing", "examining", "accessing", "routing", determining", "transmitting,"-storing,'' or the like, refer to the action and processes of a computer system, or similar electronic computing device, that manipulates and transforms data represented as physical (electronic) quantities within the computer system's registers and memories into other data similarly represented as physical quantities within the computer system registers or memories or other such information storage, transmission, or display devices.

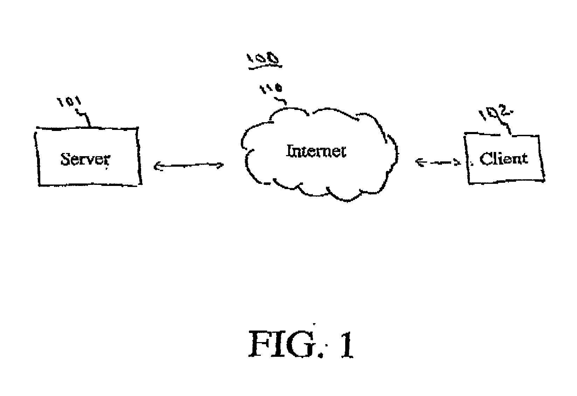

Figure 1 shows a diagram of a client/server system 100 in accordance with one embodiment of the present invention. System 100 depicts a server 101 communicating with a client 102 via a distributed computer network 110, in this case the Internet.

Figure 1 depicts the basic structure of an embodiment of the present invention, wherein a server 101 is used to retrieve specific pertinent information for one or more clients (e.g., client 102), and present the information in the most efficient manner possible. In this embodiment, server 101 is used to implement a Web portal, for serving information, news, entertainment, and the like, via the Internet 110 (e.g., the World Wide.Web). As such, server 101 is configured to provide a variety of services including Web searching, news, white and yellow pages directories, free e-mail, discussion groups, online shopping and links to other sites. In one embodiment, corver 101 can be used to implement a specifically tailored Web site that offers the specific, particular industry services, such as banking, insurance or computers, or fulfill specific needs for certain types of users, for example, business travelers who are often away from their office or their primary point of business.

Web server 101 can be configured to provide information formatted specifically for a mobile user (e.g., business traveler), thereby providing wireless access to Web portal functions via a portable handheld device, such as a cellphone or a wireless PDA (e.g., client 102). Accordingly, Web server 101 is compatible with widely used communication standards (e.g., WML, WAP, iMode, etc.) for formatting data for the smaller screens of portable handheld devices.

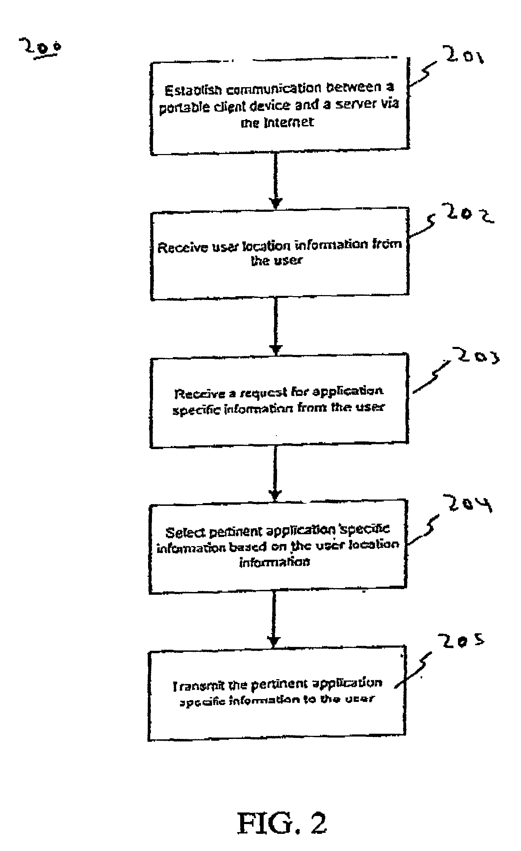

Figure 2 shows a flowchart of the steps of a user location application customization process 200 in accordance with one embodiment of the present invention. Process 200 depicts the steps as performed by a server (e.g., server 101) in providing customized user specific information to a user via the user's portable handheld client device in response to user requests.

Process 200 begins in step 201, where communication between a portable client device (e.g., a cellphone) and a server is established via the Internet. In step 202, server 101 receives user location information from the user. The client device can be a portable handheld device such as a cellular phone or a wirelessly connected PDA. The user location information can be received in accordance with WAP communication standards. The user location information can be a current address, can be a zip code, or can be geographical coordinates of the user. Such information can be entered into the portable handheld device via the device's graphical user interface, or other such means (e.g., graffiti input, menu selection, etc.). The user location information can be associated with a location name, wherein the user selects a particular location by selecting a particular location name from a menu of location names presented by a portable handheld device. An embodiment of the present invention is also compatible with modem location fixing mechanisms, such as GPS (global positioning system).

In step 203, the request for application-specific information is received from the user. Subsequently, in step 204 pertinent application-specific information is selected based upon the user location information. Application specific information of the user can be calendar information and the pertinent application specific information can be information regarding the location of calendar events with respect to the user's location. Similarly, application specific information can be hotel information, and the pertinent application specific information can be information regarding the location of hotels with respect to the user's location. Additional examples include the application specific information of the user being appointment information for the user, and the pertinent application specific information being information regarding the location of appointments with respect to the user location. Similarly, application-specific information can be any type of information a user would require from, for example, a "Yellow Pages" application, wherein the location information is used to present choices to points of interest (e.g., ATM, Bank, Post Office, etc.) to the user based upon their distance from the user's present location.

In step 205, the pertinent application-specific information is transmitted to the user. The pertinent application specific information can be transmitted to the user in accordance with different communication protocol standards and/or markup languages. The compatibility with the different communication standards ensures compatibility with a variety of different types of portable handheld devices such as cellphones, wirelessly connected PDAs, palmtop computer systems, and the like.

In this manner, one or more embodiments of the present invention automatically incorporate individual specific location information with respect to other types of information which may be retrieved by a user, and present some in a manner specific to the individual requirements of a particular user.

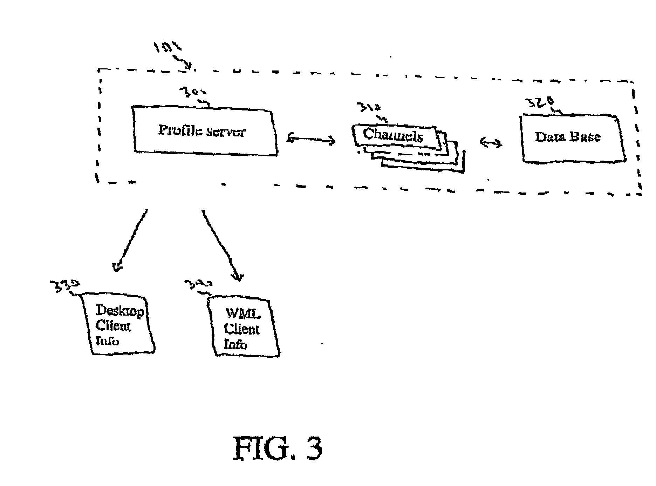

Figure 3 shows a diagram depicting one implementation of the internal software components of server 101 used to implement the location awareness functionality of one or more embodiments of the present invention. A server 101 includes a profile server 301 which stores user specific information, for example, regarding the types of information the user would be interested in. The profile server 301 interacts with a plurality of channels 310. The channels store user preferences and implement specific functionality. For example, mapping functions are provided by a mapping channel, calendar functions are provided by a calendar channel, Yellow Pages functions are provided by a Yellow Pages channel, and the like. Data for the server 101 is stored within a database 320. The profile server 301 in the channels 310 access data from database 320.

Server 101 is configured to provide information to the user in both HTML formats (e.g., desktop client info 330) and portable handheld device formats (e.g., WML client info 340). Accordingly, the user client (e.g., user client 102 of figure 1) can be either a desktop computer system or a portable handheld device.

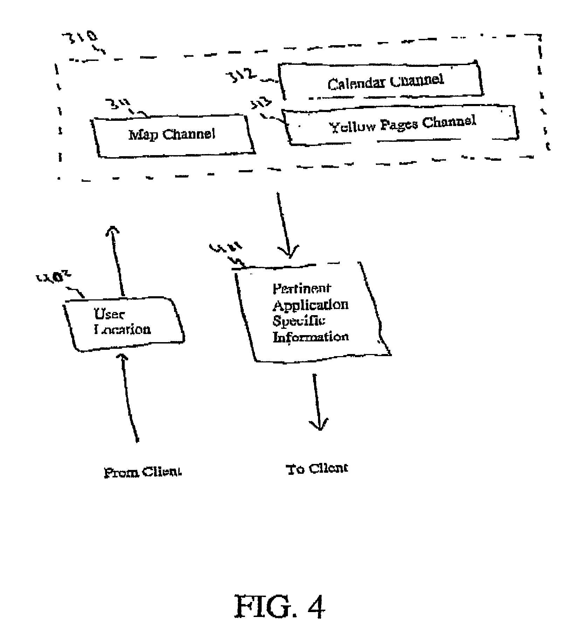

Figure 4 shows a map channel 311, a calendar channel 312, and a Yellow Pages channel 313. In the present embodiment, the user defined location will be stored by the profile server 301. A user can define addresses for multiple locations like Home, Work, Friends place, etc., and the particular channel will prompt the user with a pull down menu for his possible locations when doing, for example, a Yellow Pages lookup or for the driving directions. This functionality is diagrammed in Figure 4. User location information 402 is received from the client in the manner described above. Using this location information, map channel 311 interacts with the other channels (e.g., calendar channel 312, Yellow Pages channel 313, and others) to retrieve location aware, location pertinent, application-specific information (referred to herein as pertinent application-specific information) as described in step 204 of process 200 above.

It should be noted that the multiple channels 310 are preferably written in a server independent manner so as to avoid a rewrite if a change in a location server is required. Additionally, the channels 310 are preferably written in Java in order to use standardized APIs defined in Java.

In one embodiment, the user interface will present a pull down menu of his locations configured and a text input field where the user can type in the name of the business he/she is interested in. If the user does not have any location configured, the search will center around, for example, a default zip code.

Examples of pertinent application-specific information 401 are how described. In a case where the user queries server 101 for certain types of businesses (e.g., car repair shops), the pertinent application-specific information 401 will be a list of hyperlinked businesses (e.g., car repair shops) found (with the link taking them to a map), the distance, the city found in, and the phone number. In order to make more efficient use of the smaller screen of a portable handheld device, the WML based pertinent application-specific information will be a list of hyperlinked businesses (with the link pointing to the driving directions in text), distance, city and the phone number.

With regard to map channel 311, the user interface can have a pull down menu of his configured locations and a text input field where he can enter the address he is interested in. For example, if the user does not have any location configured, the default zip code will be mapped. To get driving directions, the user has to select from the pre-configured locations (the pull down menu) and enter an address in the text field. For desktop computer systems, the pertinent application-specific information output will be a map showing directions, while in a portable handheld device, the output can be directions in text.

### Computer system environment

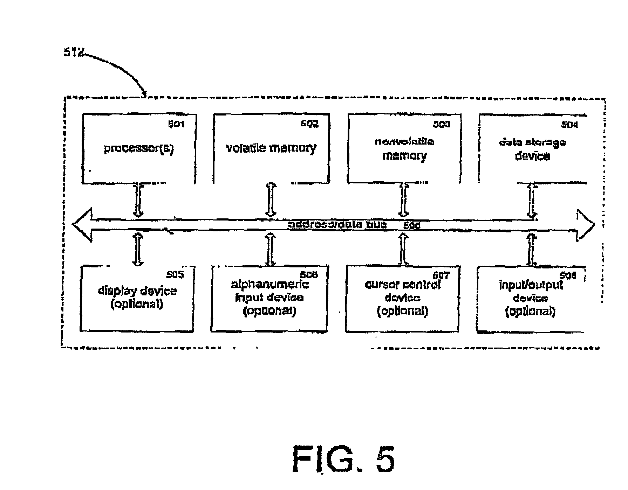

Referring to Figure 5, a computer system 512 is illustrated. Within the following discussions of embodiments of the present invention, certain processes and steps are discussed that are realized, in one embodiment, as a series of instructions (e.g., software program) that reside within computer readable memory units of system 512 and executed by processors of system 512. When executed, the instructions cause computer system 512 to perform specific actions and exhibit specific behavior which was described in detail above.

Specific aspects of the present invention are operable within a programmed computer system which can function as a client or a server machine. A generalized example of such a computer system operable to implement the elements of embodiments of the present invention is shown in Figure 5. In general, the computer system in accordance with an embodiment of the present invention includes an address/data bus 500 for communicating information, one or more central processor(s) 501 coupled with bus 500 for processing information and instructions, a computer readable volatile memory unit 502 (e.g., random access memory, static RAM, dynamic RAM, etc.) coupled with bus 500 for storing information and instructions for the central processor(s) 501, a computer readable non-volatile memory unit 503 (e.g., read only memory, programmable ROM, flash memory, EPROM, EEPROM, etc.) coupled with bus 500 for storing static information and instructions for processor(s) 501. System 512 can optionally include a mass storage computer readable data storage device 504, such as a magnetic or optical disk and disk drive coupled with bus 500 for storing information and instructions. Optionally, system 512 can also include a display device 505 coupled to bus 500 for displaying information to the computer user, an alphanumeric input device 506 including alphanumeric and function keys coupled to bus 500 for communicating information and command selections to central processor(s) 501, a cursor control device 507 coupled to bus for communicating user input information and command selections to the central processor(s) 501, and a signal input/output device 508 coupled to the bus 500 for communicating messages, command selections, data, etc., to and from processor(s) 501.

To summarize, this writing has disclosed a method and apparatus for using location information to customize information in a Web portal. The method includes the steps of receiving user location information from a user, receiving a request for application specific information from the user selecting pertinent application specific information based on the user location information, and transmitting the pertinent application specifie information to the user. The method is implemented within a client/server framework. The client device can be a portable handheld device such as a cellular phone or a wirelessly connected PDA (personal digital assistant). The user location information can be received in accordance with WAP (wireless application protocol) communication standards. The pertinent application specific information can be transmitted to the user in accordance with WML communication standards. The user location information can be a current address, can be a zip code, or can be geographical coordinates of the user. Application specific information of the user can be calendar information and the pertinent application specific information can be information regarding the location of calendar events with respect to the user location. Similarly, application specific information can be hotel information, and the pertinent application specific information can be points of interest near the hotel. The user location information can be associated with a location name, wherein the user selects a particular location by selecting a particular location name from a menu of location names presented by a portable handheld device.

The foregoing descriptions of specific embodiments of the present invention have been presented for purposes of illustration and description. They are not intended to be exhaustive or to limit the invention to the precise forms disclosed, and obviously many modifications and variations are possible in light of the above teaching. The embodiments were chosen and described in order best to explain the principles of the invention and its practical application, thereby to enable others skilled in the art to best utilize the invention and various embodiments with various modifications as are suited to the particular use contemplated. It is intended that the scope of the invention includes equivalents of the claims appended hereto.

Insofar as embodiments of the invention described above are implementable, at least in part, using a software-controlled programmable processing device such as a Digital Signal Processor, microprocessor, other processing devices, data processing apparatus or computer system, it will be appreciated that a computer program or program element for configuring a programmable device, apparatus or system to implement the foregoing described methods, mechanisms and/or modules is envisaged as an aspect of the present invention. The computer program or program element may be embodied as source code and undergo compilation for implementation on a processing device, apparatus or system, or may be embodied as object code, for example. The skilled person would readily understand that the term computer in its most general sense encompasses programmable devices such as referred to above, and data processing apparatus and computer systems.

Suitably, the computer program or program element is stored on a carrier medium in machine or device readable form, for example in solid-state memory, optical or magnetooptical memory such as a readable and/or writable disk for example a compact disk and a digital versatile disk, or magnetic memory such as disc or tape, and the processing device utilises the program, program element or a part thereof to configure it for operation. The computer program or program element may be supplied from a remote source embodied in a communications medium such as an electronic signal, including radio frequency carrier wave or optical carrier wave. Such carrier media are also envisaged as aspects of the present invention.

The scope of the present disclosure includes any novel feature or combination of features disclosed therein either explicitly or implicitly or any generalisation thereof irrespective of whether or not it relates to the claimed invention or mitigates any or all of the problems addressed by the present invention. The applicant hereby gives notice that new claims may be formulated to such features during the prosecution of this application or of any such further application derived therefrom. In particular, with reference to the appended claims, features from dependent claims may be combined with those of the independent claims and features from respective independent claims may be combined in any appropriate manner and not merely in the specific combinations enumerated in the claims.

For the avoidance of doubt, the term "comprising" used in the description and claims should not be construed to mean only "consisting only of".

## Claims

1. A method for using user location information to customize information in a Web portal, the method comprising the steps of:
receiving user location information from a user;
receiving a request for application specific information from the user;
selecting pertinent application specific information based on the user location information; and
transmitting the pertinent application specific information to the user.

2. The method of Claim 1 further including the step of transmitting the pertinent application specific information to the user in accordance with WML communication standards.

3. The method of Claim 1 or 2 further including the steps of
receiving the user location information from the user via a portable handheld device; and
transmitting the pertinent application specific information to the portable handheld device of the user.

4. The method of any preceding claim, wherein the user location information is a geographical coordinate of the user.

5. The method of any preceding claim, wherein the user location information is zip code information entered by the user.

6. In a client/server computer system, a method for using user location information to customize information presented to a portable handheld device, the method comprising the steps of:
receiving user location information from a user;
receiving a request for application specific information from the user;
selecting pertinent application specific information based on the user location information; and
transmitting the pertinent application specific information to the user, the pertinent application specific information to the user being in accordance with WML communication standards.

7. The method of any preceding claim further including the step of receiving the user location information in accordance with WAP (wireless application protocol) communication standards.

8. The method of any preceding claim wherein the user location information is a current address of the user.

9. The method of any preceding claim wherein the user location information is a list of predefined locations for the user or a list of previous locations of the user.

10. The method of any preceding claim wherein the application specific information of the user is calendar information for the user, and wherein the pertinent application specific information is information regarding the location of calendar events with respect to the user location.

11. The method of any preceding claim wherein the application specific information of the user is hotel information, and wherein the pertinent application specific information is information regarding the location of hotels with respect to the user location.

12. The method of any preceding claim wherein the application specific information of the user is appointment information for the user, and wherein the pertinent application specific information is information regarding the location of appointments with respect to the user location.

13. The method of any preceding claim wherein the default user location information is zip code information entered by the user.

14. The method of any preceding claim wherein the user location information is associated with a location name, and wherein the user selects a particular location by selecting a particular location name from a menu of location names presented by a portable handheld device.

15. A computer system operable to provide a Web portal for customizing information in dependence on user location information, said computer system configured to:
receive user location from a user;
receive a request for application specific information from the user;
select pertinent application specific information based on the user location information; and
transmit the pertinent application specific information to the user.

16. A server comprising a computer system according to claim 15.

17. A client device operable to communicate over a computer network with a computer system according to claim 15, said device configured to:
transmit user location information to said computer system;
transmit a request for application specific information to said computer system;
receive pertinent application specific information from said computer system; and
present said pertinent application specific information to said device user.

18. A client device according to claim 17 responsive to device user input to effect one or more functional features set forth in claim 17.

19. A client device according to claim 17 or 18, comprising a desk top computer system.

20. A client device according to claim 17 or 18 comprising a portable device embodied as a lap top computer system, PDA and/or wireless telephone.

21. A method of operating a client device for obtaining customized information related to user location of information from a Web portal, comprising:
transmitting user location information to said Web portal;
transmitting a request for application specific information to said Web Portal;
receiving pertinent application specific information from said Web portal; and
presenting said pertinent application specific information to a device user.

22. A computer program comprising machine or computer system-readable program elements for configuring a computer system to implement one or more features of the method of any one of claims 1 to 14.

23. A computer program product comprising a machine or computer system usable medium configured with a computer program according to claim 22.

24. A computer program comprising machine or computer system-readable program elements for configuring a client device to implement one or more features of the method of claim 21.

25. A computer program product comprising a machine or computer system usable medium configured with a computer program according to claim 24.
